# EUROPÄISCHE PATENTSCHRIFT

(11) **EP 1 314 135 B1**
(45) Veröffentlichungstag und Bekanntmachung des Hinweises auf die Patenterteilung: **01.12.2004**
(21) Anmeldenummer: 01978291.1
(22) Anmeldetag: 21.08.2001
(51) Int. Cl.: G06K 19/07, G06K 19/073, G07F 7/10

(54) **VERFAHREN ZUR VIRTUELLEN VERGRÖSSERUNG DES STACKS EINES TRAGBAREN DATENTRÄGERS**
METHOD FOR VIRTUALLY ENLARGING THE STACK OF A PORTABLE DATA CARRIER
PROCEDE PERMETTANT L'AUGMENTATION VIRTUELLE DE LA TAILLE DE LA MEMOIRE EN PILE D'UN SUPPORT DE DONNEES PORTATIF

(30) Priorität: 22.08.2000 DE 10040974
(43) Veröffentlichungstag der Anmeldung: 28.05.2003
(73) Patentinhaber: Giesecke & Devrient GmbH, 81677 München (DE)
(72) Erfinder: CIESINGER, Daniel, 80637 München (DE); FREY, Thomas, 85560 Ebersberg (DE); MERCK, Martin, 81243 München (DE); STOCKER, Thomas, 81673 München (DE)
(86) Internationale Anmeldenummer: PCT/EP2001/009664
(87) Internationale Veröffentlichungsnummer: WO 2002/019264

(56) Entgegenhaltungen:
- EP-A- 0 354 793
- WO-A-98/52160
- DE-A- 19 626 337
- FR-A- 2 777 673
- US-A- 4 833 595

## Beschreibung

Die Erfindung betrifft ein Verfahren zur virtuellen Vergrößerung der Datenstruktur eines schnellen Schreib-/Lese- Speichers auf einem tragbaren Datenträger und bezieht sich weiterhin auf einen tragbaren Datenträger mit einen Mikrocontroller, zumindest bestehend aus einen Prozessor, einer I/O-Einheit, einem schnellen Schreib-/Lese- Speicher mit einem Stack, einem langsamen Schreib-/Lese-Speicher, einem Betriebssystem und mindestens einem Daten-, Steuer- und Adreßbus.

Tragbare Datenträger sind unter anderem in Gestalt von Chipkarten bekannt. Diese zeichnen sich dadurch aus, daß sie eine integrierte Schaltung im Kartenkörper eingebaut haben, die mit Mitteln zur Datenübertragung und - speicherung und mit einer Einheit zur Bearbeitung dieser Daten ausgestattet ist. Um den Chip vor Bruch- oder Torsionsschäden zu schützen sowie aus Sicherheitsgründen wird die Fläche des Chips klein gehalten. Es hat sich in der Praxis als vorteilhaft erwiesen, möglichst eine quadratische Fläche von 25mm² zu wählen. Der auf der Chipkarte befindliche Chip mit all seinen Bauteilen, insbesondere seinen Speicherbauteilen, ist in seiner flächenmäßigen Ausdehnung daher stark eingeschränkt.

Aufgrund dieser Ausdehnungsbeschränkung und unter Berücksichtigung des typabhängig unterschiedlichen Platzbedarfes der verschiedenen Speicherbausteine - eine 1-Bit-Speicherzelle eines RAMs benötigt etwa viermal so viel Platz wie eine 1-Bit Speicherzelle eines EEPROMs, dieses wiederum viermal so viel wie eine 1-Bit-Zelle eines ROMs - entsteht die Notwendigkeit, möglichst wenig der flächenintensiven Speicherbausteine, d.h. insbesondere der RAM-Bausteine, und stattdessen mehr von weniger flächenintensiven Bausteinen, wie ein EEPROM oder ein ROM, zu verwenden. Um jedoch bei einer wünschenswerten Ersetzung eines flächenintensiven Bausteines durch einen weniger flächenintensiven anderen keine Funktionseinbuße hinnehmen zu müssen, muß die Funktionalität des ursprünglich verwendeten Bausteines gewahrt bleiben.

Chipkarten haben unterschiedlichste Anwendungsgebiete und Einsatzzwekke. So werden sogenannte Speicherkarten vornehmlich als Telefonkarten oder Krankenversicherungskarten eingesetzt. Ihre Funktionalität ist auf eine spezifische Anwendung beschränkt. Mikroprozessorkarten hingegen zeichnen sich durch ein zusätzlichen Block von Bauteilen aus, der eine CPU beinhaltet. Üblicherweise verfügen diese Karten neben der CPU ferner eine I/O-Einheit, einen Daten-, Steuer- und Adreßbus, einen flüchtigen Schreib-/Lese-Speicher (RAM), einen nicht-flüchtigen Schreib/Lese-Speicher (EEPROM) sowie einen nicht-flüchtigen Nur-Lese-Speicher (ROM). Das Betriebssystem ist dabei hauptsächlich im ROM abgelegt.

Davon abhängig, ob sie neben dem Betriebssystem noch auf weitere Programme zugreifen, sind die Karten entweder nur für eine spezielle, im ROM abgelegte, Anwendung ausgelegt, oder können unterschiedliche Aufgaben erfüllen, die in den weiteren Anwendungsprogrammen spezifiziert sind. Damit steigert sich die Funktionalität der Karten deutlich. Mit diesem Funktionalitätsgewinn steigt jedoch auch der Bedarf an Speicherplatz. So müssen beispielsweise im RAM mehr Register für die zu verarbeitenden Daten und mehr Rücksprungadressen für die Vielzahl der Unterprogramme bereitgestellt werden. Bei den derzeit gebräuchlichen Karten ist jedoch der hierfür relevante Bereich des RAM's, nämlich der als Stack organisierte Bereich für komplexere Anwendungen nicht ausreichend. Da aber, wie oben dargestellt, der Speicherplatz des flächenintensiven RAM-Bauteils nicht beliebig erweitert werden kann, beschränkt der RAM den möglichen Funktionalitätsumfang der Chipkarten.

Neuere Chipkarten verfügen über Betriebssysteme, die ein Nachladen von ausführbarem Programmcode ermöglichen. Bei diesem Kartentyp kann ein Anwendungsanbieter selbst einen Programmcode mit der Chipkarte ausführen, den der Betriebssystemhersteller nicht kennt. Sogenannte Java-Cards etwa basieren auf der Programmierung in der Sprache JAVA und auf einer sogenannte "Java Virtual Machine", die eine Simulation eines Java-Prozessors ist, der auf jedem ausreichend leistungsstarken Prozessor implementiert werden kann. Damit sind Java-Cards weitestgehend plattformunabhängig. Allerdings benötigt Java durch die notwendige "Virtual Machine" einen hohen Stackbedarf. Die beschränkte physikalische Größe des RAMs beschränkt daher die Möglichkeiten der Java-Card.

Aus der DE 196 26 337 Al sind ein Verfahren und eine Vorrichtung bekannt, bei dem/ der auf einer Chipkarte zu verarbeitende Nachrichten aus der Außenwelt eingelesen und prozessiert werden. Die über die I/O-Einheit empfangenen und zu verarbeitenden Nachrichten können dabei eine Größe aufweisen, die wegen der Speicherplatzbeschränkung nicht vollständig in das RAM eingeschrieben werden kann. Aus Sicherheitsgründen müssen von außen kommende Nachrichten zudem einer Zugriffsberechtigungs-Kontrolle von der CPU unterzogen werden, bevor sie weiterprozessiert werden dürfen. Eine einfache Zerteilung der Nachrichten in Blöcke von geringerer Größe würde die Authentifikation unnötig aufwendig machen und verzögern. Um trotz zu kleinem RAMs eine Kommunikation mit der Chipkarte zu ermöglichen, die weitestgehend unabhängig von der Datengröße der Nachrichten ist, sollen von außen kommende Nachrichten entweder direkt in das EEPROM oder indirekt im Anschluß an eine Zwischenspeicherung im RAM im EEPROM abgelegt werden. Die vorgeschlagene Lösung beruht auf dem Ansatz, für Nachrichten, bzw. Daten, die aufgrund ihrer Größe nicht vollständig im RAM gespeichert werden können, Möglichkeiten zur Zwischenspeicherung. zu schaffen. Die scheinbare Speichervergrößerung erfolgt dabei über den I/O-Puffer des RAM, d.h. über den wahlfrei beschreibbaren Teil des RAMs. Hinweise zur Vergrößerung desjenigen Bereiches des RAM's, der als Stack organisiert ist, enthält die Schrift nicht..

Aus der EP 720 087 ist der Vorschlag entnehmbar, einen Hardwarestack durch die Einrichtung eines Erweiterungsspeichers virtuell zu vergrößern. Der Erweiterungsspeicher soll in einem definierten Bereich des RAM's eingerichtet werden. In den Erweiterungsspeicher werden die jeweils ältesten Stackeinträge ausgelagert, wenn der Füllzustand des Hardwarestacks einen Grenzwert überschreitet, der knapp unter der maximalen Aufnahmekapazität des Hardwarestacks liegt. Bei Erreichen des Grenzwertes wird der jeweils älteste Stackeintrag in den Erweiterungsspeicher ausgelagert. Ist der Grenzwert immer noch nicht unterschritten, wird anschließend auch der nächstälteste Stackeintrag ausgelagert. Dieses bekannte Verfahren stellt sicher, daß der Hardwarestack stets zumindest nahezu vollständig nutzbar ist und dadurch eine effektive Speichernutzung möglich wird. Hierdurch unterscheidet es sich von einem anderen bekannten Konzept, nach dem der Hardwarestack in Sektoren gegliedert wird und bei jedem Unterprogrammaufruf durch eine Sektorrotation ein neuer Sektor genutzt wird, wobei im Falle der Belegung aller Sektoren ein Sektor in einen Speicher ausgelagert wird.

Das aus der EP 720 087 entnehmbare Verfahren ist gleichwohl nicht auf tragbare Datenträger übertragbar, weil das bedarfsweise Auslagern einzelner Stackeinträge einen schnellen Speicher erfordert und deshalb zwingend im RAM realisiert werden muß. Auf tragbaren Datenträgern, speziell auf Chipkarten, steht im RAM hierfür jedoch nicht ausreichend Platz zur Verfügung.

Der Stack ist im Unterschied zu den anderen Bereichen im RAM speziell organisiert. Er bildet eine Datenstruktur, die als LIFO-Datenstruktur (last in first out) implementiert ist und grundsätzlich einfachere Verwaltungs- und Zugriffsalgorithmen ermöglicht als die übrigen Speicherbereiche des RAMs, auf die randomisiert zugegriffen wird. Auslagerung von Teilen des Stacks kann deshalb anderen Kriterien genügen als in Bezug auf den übrigen Teil des RAMs anzuwenden sind.

Der RAM von in Hochsprache frei programmierbaren Chipkarten wird gegenwärtig durch die - noch - üblichen 8-Bit Controller beschränkt und umfaßt typischerweise 256 Byte internen IRAMs sowie 1600 Byte über Adreßrechnungen adressierbaren, deshalb geringfügig langsameren erweiterten XRAM. Davon wird in der Regel der IRAM komplett als Stack genutzt, während im XRAM der Arbeitsspeicher und der I/O-Puffer liegen.

Aufgabe der vorliegenden Erfindung ist es deshalb ein Verfahren zu schaffen, das eine virtuelle Vergrößerung des als Stack organisierten Bereiches des RAM's für einen tragbaren Datenträger, insbesondere in Gestalt einer Chipkarte ermöglicht, so daß auch Anwendungen lauffähig sind, die einen physikalisch größeren Stack benötigen würden, als er auf dem Datenträger physikalisch zur Verfügung gestellt wird - unter möglichst vollständiger Beibehaltung der ursprünglichen Rechenleistung und unter adaptiver Berücksichtigung der jeweils aktuellen Systemanforderungen - wie der Applikations-Software - und Systembalancierungseigenschaften - wie den Zugriffszeiten auf RAM und EEPROM, Lebensdauer des EEPROM, etc.

Eine weitere Aufgabe liegt in der Bereitstellung eines tragbaren Datenträgers, auf dem komplexe Anwendungen, insbesondere Java-Applets lauffähig sind, die einen erweiterten Stack voraussetzen.

Diese Aufgabe wird gelöst durch ein Verfahren mit den Merkmalen des Anspruchs 1, das die Schritte aufweist: Segmentierung des Stacks in mindestens zwei Stacksegmente, Erfassen eines Füllungsparameters, der einen Füllungszustand für den Stack beschreibt, Überwachen des Füllungsparameters, indem der zuvor erfaßte Füllungsparameter mit einem vorbestimmten Grenzwert verglichen wird, und segmentweise Auslagern zumindest eines Teiles der Datenstruktur des Stacks in ein weiteres Speichermedium, sobald ein vorbestimmtes Verhältnis zwischen Grenzwert und Füllungsparameter erreicht ist.

Weiterhin wird die Aufgabe durch eine Chipkarte gelöst, bei der das Betriebssystem Mittel aufweist, um den Stack zu segmentieren und um zumindest ein Segment des RAM's in einen weiteren Speicher, insbesondere in einen nicht-flüchtigen Schreib-/Lese-Speicher wie ein EEPROM, auszulagern.

Üblicherweise ist der Stack als LIFO-Datenstruktur implementiert, so daß der jeweils jüngste Eintrag auch als erstes wieder bearbeitet wird. Neben Rücksprungadressen von Unterprogrammen beinhaltet er lokale Variablen.

Der Programmstack ist ein Stack, in den beim Aufruf von Unterprogrammen die jeweiligen Rücksprungadressen der Unterprogramme abgelegt sind. Bei Abarbeitung des Programmes werden nun nacheinander die jeweiligen Rücksprungadressen und die lokalen Variablen des Unterprogrammes abgelegt. In umgekehrter Reihenfolge werden diese dann beim Rücksprung aus dem jeweiligen Unterprogramm in das Hauptprogramm benötigt. Bereits lang zurückliegende Stackinhalte, bzw. Rücksprungadressen belegen zwar den Stackspeicherplatz, werden aber aktuell für die Ausführung des jeweiligen Programmes nicht benötigt. Deshalb können Blöcke bzw. Segmente von Stackzellen in einen anderen, langsameren Speicher, wie beispielsweise den EEPROM ausgelagert werden. Erst kurz bevor das ablaufende Programm wieder zu dem jeweiligen übergeordneten Programm zurückspringen muß, müssen die jeweiligen Stack-Speicherinhalte wieder verfügbar sein und gegebenenfalls aus dem anderen Speichermedium wieder eingelagert werden. In der Zwischenzeit kann der Speicherplatz dieser Stack-Zellen erfindungsgemäß wiederum für andere zu speichernde Datensätze, z.B. für weitere Rücksprungadressen und lokale Variablen genutzt werden. Mit Hilfe dieses Verfahrens erfährt der Stack eine virtuelle Vergrößerung.

Die Erfindung macht sich dabei zunutze, daß sinnvollerweise speziell der Stack eine virtuelle Vergrößerung erfahren muß, um den RAM als Ganzes am effizientesten entlasten zu können. Aufgrund der spezifischen Organisation des Stacks ist ein erfindungsgemäßer Auslagerungsmechanismus wirkungsvoller anwendbar als bei den anders oder nicht organisierten Speicherbereichen des RAMs. Würden etwa Bereiche des Puffers ausgelagert, müßte mit erhöhten Zugriffszeiten auf die ausgelagerten Inhalte in dem langsameren Speicher gerechnet werden, da nicht vorhersagbar ist, wann welcher ausgelagerte Pufferspeicherinhalt wieder im RAM zur Verfügung stehen muß, wenn dieser einem Random-Access Zugriff unterliegt. Es kann nicht ausgeschlossen werden, daß für den Programmablauf gerade die Inhalte der ausgelagerten Zellen kurz nach deren Auslagerung wieder im RAM verfügbar sein müssen. Damit ergibt sich eine erhöhte Anzahl von zeitaufwendigen Zugriffen auf das EEPROM. Sinnvoll kann vorgesehen sein, den Zeitpunkt des "Zu-Verfügung-Stehens-im-RAM" bei der Auslagerung von Stackinhalten vorauszukalkulieren. Dies ist aufgrund der Organisation des Stacks als LIFO-Datenstruktur möglich.

Eine vorteilhafte Ausführungsform der Erfindung besteht darin, daß die Segmentierung in 2-er Potenzen 2^{n-m} erfolgt, mit m = 1,2,3..., wobei 2^{m} die Anzahl der Segmentierungen und wobei 2ⁿ die Größe des Stacks nach Speicherzellen oder nach Bytes betrifft. Die Maßzahl m für die Teilung wird vorteilhafterweise so gewählt, daß eine optimale Balancierung des Chipkartensystems erreicht wird, d.h. daß Parameter wie Größe des Stacks, Zeit für Aus- und Einlagern der Segmente, zusätzlicher Verwaltungsaufwand für den Segmenttransfer, Bedarf an Stack-Speicherplatz etc. für die aktuelle Anwendung der Chipkarte Berücksichtigung finden. Die Segmentierung wird also vorteilhafterweise in Abhängigkeit von Parametern des Chipkartensystems und in Abhängigkeit von der Applikations-Software, wie Größe, Anzahl der Unterprogramme etc. gewählt. In einer bevorzugten Segmentierung entspricht die Segmentgröße genau der Größe der Blöcke des EEPROMs.

Damit ergibt sich beispielsweise, daß für einen ersten bestimmten Einsatz der Chipkarte eine Zweiteilung des Stacks, bzw. eine Segmentierung in zwei Teile am sinnvollsten ist, damit das Chipkartensystem als Ganzes einen optimierten Ablauf gewährleisten kann. Für einen weiteren bestimmten Einsatz der Chipkarte kann eine Segmentierung in mehrere, kleinere Segmente klüger sein, da hiermit beispielsweise leichter eine optimale Systembalancierung erreicht werden kann.

Vorteilhafterweise sind mittels des erfindungsgemäßen Verfahrens auch Chipkartenanwendungen lauffähig, die einen besonders großen Stackbereich benötigen, wie beispielsweise Programme, die komplexe kryptographische Algoritnmen beinhalten oder Karten mit Java-Applets. Hier haben die Anwender die Möglichkeit, ihre spezifischen Programme auf die Karte zu laden. Damit erhöht sich vorteilhafterweise die Funktionalität der Karte und deren Lebensdauer, da z.B. Programm-Updates auf die Karte gespielt werden können.

In einer alternativen Ausführungsform der Erfindung wird das jeweils unterste Stacksegment nicht in den EEPROM ausgelagert, sondern in einen anderen nicht-flüchtigen Schreib/Lese-Speicher, wie ein Flash-EEPROM oder ein FRAM (ferroelectric random access memory) oder in einen zusätzlichen flüchtigen Schreib/Lese-Speicher, beispielsweise ein RAM, das flächenoptimiert ist, dadurch allerdings langsamere Zugriffszeiten aufweist.

In einer Ausführungsvariante werden insbesondere zeitliche Nachteile beim Auslagern von Stacksegmenten aus dem RAM-Speicher mit sehr schnellen Zugriffszeiten in den EEPROM-Speicher mit wesentlich erhöhten Zugriffszeiten vermieden, indem vorab eine Stackbilanz erstellt wird. Damit wird ein Segment nur dann ausgelagert, wenn sich bei Berücksichtigung der erhöhten Zugriffszeiten in Relation zu dem frei werdenden Stackbereich eine positive Endbilanz ergibt. Zur Erstellung der Stackbilanz kann die Applikations-Software auf einem Simulator getestet werden oder eine Datenflußanalyse vorgenommen werden.

Durch die Wahl der Segmentierung des Stacks in Zweier-Potenzen 2^{n-m} ergibt sich der Vorteil, daß der Füllungsparameter in einer minimalen Anzahl, nämlich (m), von Adress-Bits codiert werden kann. Das bedeutet, daß bei einer Zweiteilung, d.h. m=1, ein Adress-Bit ausreicht, um den Wechsel von einem Stacksegment zu dem nächsten zu kennzeichnen und zu erkennen. Bei einer Aufteilung des Stacks in vier Teile, d.h. m=2, werden lediglich zwei Adress-Bits benötigt.

Weitere Vorteile und Merkmale der Erfindung ergeben sich aus der nachfolgenden detaillierten Figurenbeschreibung, in der:
- Fig. 1: eine schematische Darstellung von Grundbausteinen eines erfindungsgemäßen Mikrocontrollers auf einer teilweise dargestellten Chipkarte und
- Fig. 2: eine schematische Darstellung eines Stacks ist, der erfindungsgemäß segmentiert ist.

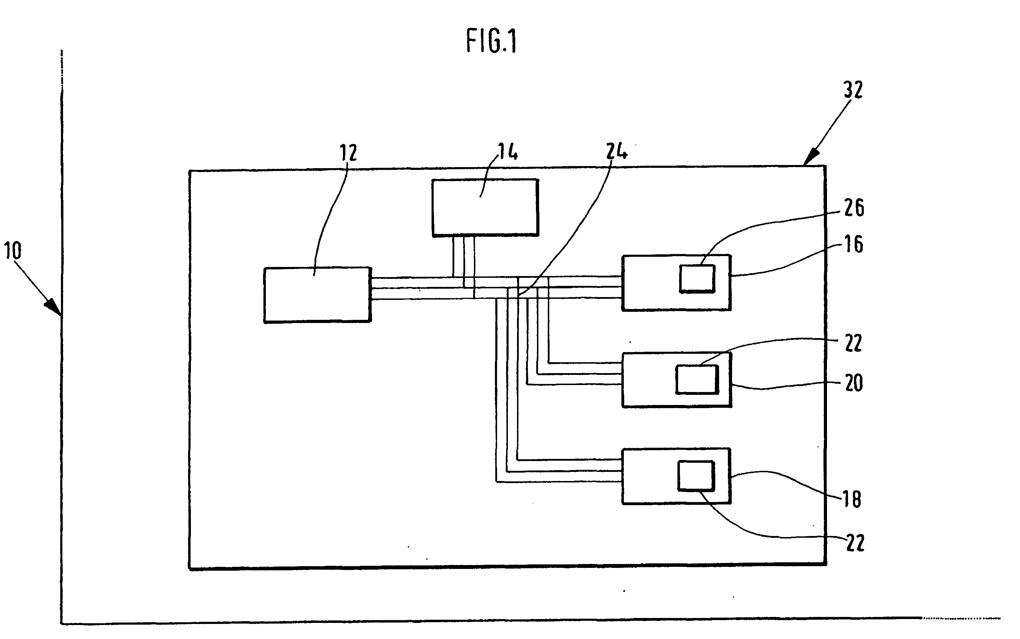

Figur 1 deutet schematisch einen tragbaren Datenträger 10 an, für den im folgenden die Gestalt einer Chipkarte angenommen wird. Auf der Chipkarte 10 befindet sich ein Mikrocontroller 32, bestehend aus einem Prozessor 12, einer I/O-Einheit 14, einem flüchtigen Schreib-/Lesespeicher 16, insbesondere in Form eines RAMs 16 (Random Access Memory), einem nicht-flüchtigen Schreib-/Lesespeicher 18, insbesondere in Form eines EEPROM 18 (Electrical Erasable Programmable Read Only Memory), einem nicht-flüchtigen Nur-Lese-Speicher 20, insbesondere in Form eines ROMs 20 (Read Only Memory), einem in den Speichern 18 und 20 abgelegten Betriebssystem 22 sowie einem Daten-, Steuer- und Adreßbus 24. Jeder Speicher 16, 18, 20 umfaßt eine Vielzahl von 1-Bit-Speicherzellen, deren physische Größe vom Typ des Speichers abhängt.

Der RAM 16 ist der Arbeitsspeicher des Systems. Er zeichnet sich durch schnelle Zugriffszeiten aus, ist aber hinsichtlich der Größe der Speicherzellen platzintensiv und verliert seinen Inhalt, sobald die Versorgungsspannung, auch kurzzeitig, nicht mehr vorhanden ist. In gängigen, eine freie Programmierung in Hochsprache erlaubenden Chipkartensystemen mit 8-Bit Controller besteht der RAM z.B. aus einem 256 Byte großen internen IRAM, der um einen erweiterten, über Adreßrechnungen adressierbaren XRAM mit typisch 1600 Byte ergänzt wird. Üblicherweise ist der RAM 16 in verschiedene Bereiche gegliedert: einen Bereich für Register, einen Stack 26, einen Bereich für Variablen und einen Bereich für I/O-Puffer, sowie einen Arbeitsbereich für komplexe Algorithmen, wie beispielsweise kryptographische Algorithmen.

Der Stack 26 - als Teil des RAMs 16 - ist als LIFO-Datenstruktur implementiert. Weiterhin ist er in Segmente 30 gegliedert, die jeweils eine bestimmte Zahl von Zellen umfassen. Um eine Aussage über einen Füllungszustand des Stacks 26 zu erhalten, ist ein Stackpointer 28 vorgesehen, der auf den jeweils zuletzt gespeicherten Eintrag, insbesondere den untersten Eintrag, im Stack 26 zeigt.

Das ROM 20 behält die Daten, auch wenn die Versorgungsspannung nicht anliegt. Ein schreibender Zugriff auf diesen Speicherbaustein ist nicht möglich. Hier ist hauptsächlich das Betriebssystem abgelegt.

Das EEPROM 18 ist der aufwendigste Speicherbaustein. Er ist in Blöcke gegliedert, die jeweils eine bestimmte Zahl von Zellen umfassen. Bei jedem Schreibvorgang wird jeweils ein Block beschrieben. Die Daten bleiben im EEPROM auch ohne Stromzufuhr erhalten. Allerdings weist er sehr lange Zugriffszeiten auf, da die Schreibdauer für EEPROM-Blöcke weitgehend unabhängig von der Anzahl tatsächlich geschriebener Bytes ist. Gängige Schreibdauern liegen in der Größenordnung von 3 ms/Block.

In einer bevorzugten Ausführungsform der Erfindung ist eine Adressierung von jeweils ausgelagerten Stacksegmenten 30 über ein Ziel-Adress-Register gelöst, das vorzugsweise ebenfalls im RAM 16 abgelegt ist. Wird ein Segment 30 aus dem Stack 26 in das EEPROM 18 ausgelagert, so wird das mit der Anfangsadresse des EEPROMs 18 initialisierte Ziel-Adress-Register inkrementiert. Im hier angesetzten Fall wird etwa der Adreßwert um die Größe des Segmentes, also um 2^{n-m} erhöht. Soll nun ein weiteres Segment 30 eingelagert werden, wird dieses Ziel-Adress-Register wiederum, um 2^{n -m} inkrementiert, so daß es immer aktuell auf das neueste Segment zeigt. Wird ein eingelagertes Segment 30 wieder aus dem EEPROM ausgelagert, um wieder im Stack 26 zur Verfügung zu stehen, wird das Ziel-Adress-Register dekrementiert, im hier angesetzten Fall etwa um 2^{n-m}.

In einer alternativen Ausführungsform der Erfindung weist die Chipkarte neben den erwähnten Bauteilen noch zusätzliche Bauteile auf, wie eine hardwareunterstützte Speicherverwaltung, einen mathematischen Coprozessor, insbesondere für die Berechnung von Public-Key-Algorithmen, eine Einheit zur Fehlererkennung und -korrektur im EEPROM, einem Zufallsgenerator etc.

In einer besonders effizienten Ausführungsform der Erfindung ist das Verfahren in Hardware realisiert und somit wesentlich schneller in der Ausführung als eine Software-Realisierung. Hierzu weist der Mikrocontroller 32 zusätzlich einen Pagecontroller auf. Der Pagecontroller ist als eine spezifische sogenannte Memory Managing Unit (MMU) ausgebildet, die Mittel zum Aus- und gegebenenfalls Einlagern von Stacksegmenten 30 nach dem erfindungsgemäßen Verfahren aufweist.

Ist das erfindungsgemäße Verfahren in Software realisiert, so ist der Prozessor 12 zusammen mit dem Betriebssystem 22 für den Transfer von Stacksegmenten 30 zuständig.

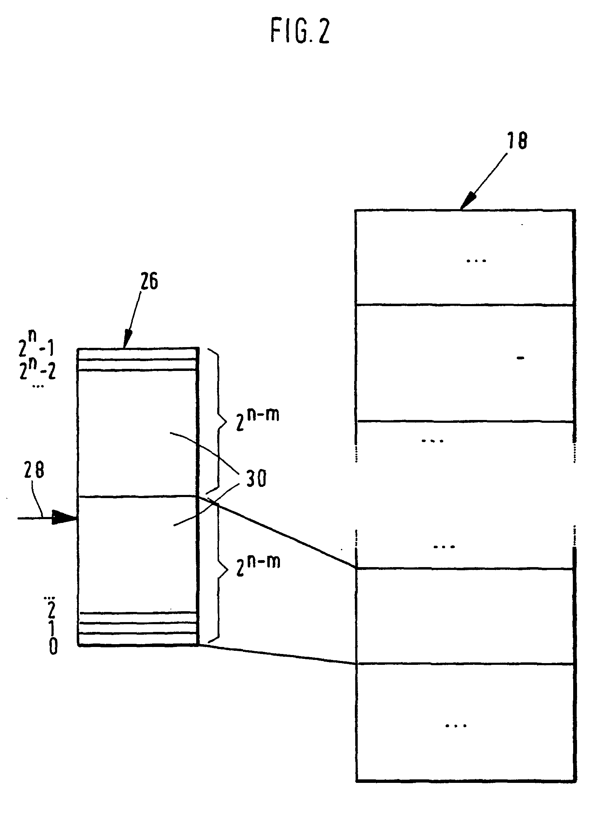

Nachfolgend wird unter Bezugnahme auf Figur 2 die Funktionsweise des erfindungsgemäßen Verfahrens beschrieben.

Bei Ablauf eines Programmes werden die jeweilige Adressen für den Rücksprung von den Unterprogrammen in die hierarchisch übergeordneten Unterprogramme oder in das Hauptprogramm zusammen mit aktuellen lokalen Variablen den Berechnungsergebnissen sowie den Aufrufparametern in den Stack 26 abgelegt. Je weiter das Programm fortfährt, desto größer wird der belegte Bereich im Stack 26. Damit trotzdem auch Programme ausführbar sind, die einen größeren verfügbaren Bereich im Stack 26 erfordern, als er eigentlich physikalisch vorhanden wäre, werden einzelne bereits beschriebene oder belegte Segmente 30 des Stacks 26 in einen größeren, aber langsameren Speicher, vorzugsweise den EEPROM 18 ausgelagert. Dabei wird vorteilhafterweise das am längsten zurückliegend beschriebene Segment 30 gewählt, das für die Programmausführung erst wieder möglichst spät benötigt wird.

Bei fortgeschrittenem Programmablauf befinden sich einige Segmente 30 in dem EEPROM 18. Ist nun wieder ausreichend Kapazität als freier Speicherplatz auf dem Stack 26 vorhanden und soll auf ein ausgelagertes Segment zugegriffen werden, werden die ausgelagerten Segmente 30 nacheinander - einzeln oder zusammen - wieder in den Stack 26 rückgelagert. Diese Rücklagerung wird vorteilhafterweise so ausgeführt, daß die Systemparameter - wie Dauer des Aus- und Einlagerns, Häufigkeit des Zugriffs auf das jeweilige Stackelement etc. - optimal berücksichtigt werden.

Die Auslagerung und ebenso die Rücklagerung auszulagernder Segmente erfolgen jeweils segmentweise in einer einzelnen, zusammenhängenden Transferoperation. Zweckmäßig erfolgen Aus- bzw. Wiedereinlagerung unter Verwendung bekannter Blocktransferanweisungen.

Durch geeignete Bestimmung eines Grenzwertes GW und der Größe der Segmentierung kann bei Mikrocontrollergestaltung mit zusätzlicher MMU vermieden werden, daß die CPU beispielsweise "gestallt" wird, d.h. daß der Prozessor erst warten muß, bis das aktuell benötigte Stackelement wieder aus dem EEPROM in den Stack 26 zurück geladen wird.

Ein durch das Fehlen einer eigenen Energiequelle bedingte Systemeigenschaft von Chipkarten bildet die Möglichkeit, daß während einer laufenden Prozessierung, z.B. einem Schreiben von Daten in das EEPROM die Stromzufuhr der Karte unterbrochen wird, etwa durch Herausziehen aus dem Lesegerät. Der Zustand der augenblicklich prozessierten Daten kann dann unbestimmt sein. Daten können insbesondere verloren oder nur zum Teil auf den Speicher übertragen worden sein. Insbesondere können der im RAM befindliche Stack 26, der Stackpointer 28 und das Zieladressregister verloren gehen. Dadurch können unter anderem Dateien entstehen, die teilweise den neuen Datensatz und gleichzeitig teilweise den alten Datensatz enthalten. Diese Inkonsistenz würde zu Anwendungsproblemen führen. Um solche Inkonsistenzen sicher zu vermeiden, werden bestimmte, besonders relevante Aktionen auf der Chipkarte in sog. atomare Abläufe strukturiert, das heißt in Abläufe, die nur nach dem binären Prinzip ganz oder gar nicht ausführbar sind. Da die Hardware von Chipkarten atomare Abläufe nicht unterstützt, muß dieses Prinzip in Software realisiert werden. Dabei kann es notwendig werden, bestimmte Bereiche im RAM, insbesondere im Stack, erfindungsgemäß virtuell freizuhalten, um beispielsweise spezielle Datensätze als Ganzes und ungeteilt prozessieren zu können.

Ist das Chipkartensystem, insbesondere die Software im Mikrocontroller 32, ausgelegt, um atomare Operationen auszuführen, beispielsweise einen spezifischen Bytecode eines Java-Applets, dann kann in einer vorteilhaften alternativen Ausführungsform der Erfindung der Stackbedarf vorher ermittelt und beispielsweise in einer dafür vorgesehenen Tabelle abgelegt werden. Die Verwaltung der jeweils aus- und einzulagernden Segmente wird dann anhand dieser Tabelle ausgeführt.

Durch das erfindungsgemäße Verfahren wird bei einem physikalisch begrenzt verfügbarem CPU-Stack in vorteilhafter Weise ein Stack 26 mit theoretisch unbegrenzter Größe bereitgestellt.

Damit das Chipkartensystem beim Ablauf eines Programmes die Aus- und Einlagerung steuern kann, werden Informationen bereitgestellt, die den Füllungszustand des Stacks 26 des RAMs 16 angeben. Dies wird über einen Füllungsparameter, vorzugsweise in Form eines Stackpointers 28 realisiert, der immer auf die Speicherzellen des Stacks 26 zeigt, in die der letzte Eintrag erfolgt ist. Bei jedem neuen Eintrag im Stack 26 wird der Stackpointer 28 inkrementiert.

Wahlweise kann nun bestimmt werden, ab welchem Füllungszustand des Stacks 26 ein Stacksegment 30 ausgelagert werden soll. Abhängig von der jeweiligen Anwendung kann es zweckmäßig wein, daß nur sehr selten und dafür relativ große Segmente 30 ausgelagert werden, z.B. bei einer Segmentierung in zwei Teile. Andererseits kann bisweilen eine kleinere Untergliederung sinnvoller sein, z.B. bei einer höheren Segmentierung, wobei häufiger kleinere Segmente ausgelagert werden.

Diese erweiterte Gestaltbarkeit des erfindungsgemäßen Verfahrens wird durch die Festlegung eines Grenzwertes GW ermöglicht. Er wird vorzugsweise so gewählt, daß eine optimale Balancierung des gesamten Chipkartensystems gewährleistet ist, d.h. daß die Zugriffszeiten auf den RAM und auf den EEPROM 18 aufeinander abgestimmt sind und die CPU-Rechenzeit und der zusätzliche Speicherbedarf durch die Verwaltung, insbesondere die Adressierung der ausgelagerten Segmente 30, berücksichtigt ist. Der Grenzwert GW wird in einer ersten zweckmäßigen Einstellung auf die Größe eines Segmentes festgelegt, so daß bei Überschreiten der jeweiligen Segmentgrenze das älteste Segment 30 ausgelagert wird. Sehr zweckmäßig entspricht die Größe eines Segments 30 genau der Größe eines Blockes im EEPROM 18. Die Übertragung der Stack-Segmente zwischen RAM 16 und EEPROM 18 kann dann zeitoptimiert mittels einer einzigen Blocktransferanweisung erfolgen. In einer weiteren zweckmäßigen Einstellung wird der Grenzwert GW so eingestellt, daß er einem Vielfachen der Segmentgröße entspricht, so daß blockweise immer mehrere Segmente 30 gleichzeitig ausgelagert werden. Diese Segmente 30 können dann in gleicher Weise als Block von Segmenten 30 wieder in den Stack 26 eingelagert werden. Die Rücklagerung kann aber ebenso auch segmentweise einzeln erfolgen. Generell muß die Anzahl der in einem Schritt ausgelagerten Segmente nicht der Anzahl von Segmenten entsprechen, die in einem Schritt wieder in den Stack 26 zurück transferiert wird. Lediglich die Summe über alle transferierten Segmente muß ausgeglichen sein.

Durch Festlegung des Grenzwertes GW ist es auch möglich, die Lebensdauer des EEPROM 18-Speicherbausteins zu berücksichtigen. EEPROMs erlauben nur eine technisch begrenzte Anzahl von Schreib-/Löschzyklen, wobei die Speicherdauer kürzer wird, je öfter sie beschrieben und gelöscht werden. Vorzugsweise wird der Grenzwert GW deshalb so gewählt, daß die Performance des Systems und deren Lebensdauer optimal aufeinander abgestimmt sind.

In der bevorzugten Ausführungsform wird das Verhältnis zwischen Grenzwert GW und Stackpointer 28 so gewählt, daß es sich mit der Relation "Stackpointer 28 ≤ Grenzwert GW" beschreiben läßt. Das heißt, sobald der Füllungszustand des Stacks 26 über die vorbestimmte Segmentgröße steigt, wird das jeweils älteste Stacksegment 30 ausgelagert. Wie die Auslagerung wird zweckmäßig auch die Wiedereinlagerung von Segmenten in den RAM 16 durch einen Grenzwert bestimmt. Dieser kann identisch mit GW sein. Der Grenzwert für die Wiedereinlagerung der Segmente 30 kann von dem Grenzwert GW aber auch verschieden sein, um die Variabilität des erfindungsgemäßen Verfahrens zu erhöhen. Weiter sind auch Abwandlungen dieses Verfahrens sinnvoll. Beispielsweise kann es bei kurzen Programmen vorteilhaft sein, daß zu Beginn des Programmes nicht sofort ausgelagert wird, sondern erst, wenn der Stackpointer 28 die nahezu vollständige Füllung des Stacks 26 bedeutet.

Üblicherweise besteht der Mikrocontroller 32 in der hauptsächlichen Ausführungsform der erfindungsgemäßen Chipkarte 10 aus den Speicherbausteinen RAM 16, ROM 20 und EEPROM 18. Einzelne Blöcke des Stacks 26 innerhalb des RAMs 16 werden erfindungsgemäß in das EEPROM 18 ausgelagert. Alternativ dazu besteht der Mikrocontroller 32 aus zwei RAM-Bausteinen, dem RAM 16 und einem zusätzlichen RAM-Baustein, und einem ROM 20. Dabei ist der zusätzliche RAM-Baustein flächenoptimiert; er weist allerdings höhere Zugriffszeiten auf als das RAM 16. Erfindungsgemäß werden dann die Segmente 30 des im RAM 16 vorhandenen Stacks 26 in Speicherbereiche des zusätzlichen RAM-Bausteins ausgelagert.

## Patentansprüche

1. Verfahren zur virtuellen Vergrößerung einer Datenstruktur eines flüchtigen Schreib-/Lese-Speichers (16) auf einem tragbaren Datenträger, der als Stack (26) organisiert ist, wobei
- der Stack (26) in mindestens zwei Stacksegmente (30) segmentiert wird,
- ein Füllungsparameter , der einen Füllungszustand für den Stack (26) beschreibt, erfaßt und durch Vergleich mit einem vorbestimmten Grenzwert (GW) überwacht wird,
- ein Teil der Datenstruktur in ein weiteres, auf dem Datenträger befindliches Speichermedium (18,20) ausgelagert wird, sobald ein vorbestimmtes Verhältnis zwischen Grenzwert (GW) und Füllungsparameter erreicht ist,
und
- die Auslagerung in das weitere Speichermedium (18,20) segmentweise erfolgt.

2. Verfahren nach Anspruch 1, **dadurch gekennzeichnet, daß** das weitere Speichermedium ein Schreib-/Lese- Speicher ist, insbesondere ein nicht-flüchtiger Schreib-/Lese- Speicher (18).

3. Verfahren nach A1, **dadurch gekennzeichnet, daß** das Verfahren zusätzlich folgenden Schritt umfaßt:
- Einlagern des ausgelagerten Stacksegmentes (30) in den Stack (26), sobald ein vorbestimmtes Verhältnis zwischen Füllungsparameter und einem zweiten Grenzwert erreicht ist, insbesondere sobald der Füllungsparameter kleiner ist als der zweite Grenzwert.

4. Verfahren nach einem der vorstehenden Ansprüche, **gekennzeichnet durch** folgenden zusätzlichen Schritt:
- Verwalten einer Ziel-Adresse des jeweils in den nicht flüchtigen Schreib-/Lese- Speicher (18) ausgelagerten Stacksegmentes (30), vorzugsweise in einem Register im flüchtigen Schreib-/Lese-Speicher (16), wobei die Ziel-Adresse bei jedem neu ausgelagerten Stacksegment (30) um ein ganzzahliges Vielfaches der Segmentgröße erhöht und bei jedem wieder in den Stack (26) eingelagerten Stacksegment (30) um ein ganzzahliges Vielfaches der Segmentgröße erniedrigt wird.

5. Verfahren nach einem der vorstehenden Ansprüche, **dadurch gekennzeichnet, daß** die Segmentierung in Segmente der Größe 2^{n-m} erfolgt, mit m = 1,2,3..., wobei 2^{m} = Anzahl der Segmentierungen und 2ⁿ = Größe des Stacks (26), und daß m so gewählt wird, daß eine optimale Balancierung des Datenträgersystems erreicht wird.

6. Verfahren nach Anspruch 5, **dadurch gekennzeichnet, daß** der Grenzwert (GW) und/ oder der zweite Grenzwert mit der Größe des Segmentes (30), nämlich 2^{n-m}, oder mit einem ganzzahligen Vielfachen der Segmentgröße übereinstimmt.

7. Verfahren nach A1, **dadurch gekennzeichnet, daß** sich das Verhältnis zwischen dem Grenzwert (GW) und dem Füllungsparameter mit folgender Relation beschreiben läßt: "Füllungsparameter ≤ Grenzwert".

8. Verfahren nach einem der vorstehenden Ansprüche, **dadurch gekennzeichnet, daß** die Chipkarte (10) ein Betriebssystem aufweist, das ein Nachladen von ausführbarem Programmcode ermöglicht.

9. Verfahren nach einem der vorstehenden Ansprüche, **dadurch gekennzeichnet, daß** das Aus- und/oder Einlagern, eines Stacksegmentes (30) mittels bekannter Blocktransfer -Anweisungen erfolgt.

10. Verfahren nach einem der vorstehenden Ansprüche, **dadurch gekennzeichnet, daß** der Füllungsparameter als Stackpointer (28) ausgebildet ist.

11. Verfahren nach A1 **dadurch gekennzeichnet, daß** jeweils dasjenige Stacksegment (30) ausgelagert wird, das am ältesten ist.

12. Verfahren nach einem der vorstehenden Ansprüche, **dadurch gekennzeichnet, daß** das ausgelagerte Stacksegment (30) Rücksprungadressen von Unterprogrammen, lokale Variablen, Zwischenergebnisse und/oder Aufrufparameter zum Inhalt hat.

13. Verfahren nach einem der vorhergehenden Ansprüche, **dadurch gekennzeichnet, daß** eine Verwaltung des Stacks (26) in Hardware realisiert wird, welche folgende Schritte ausführt:
Segmentierung des Stacks (26) in mindestens zwei Stacksegmente (30), Erfassen eines Füllungsparameters, der einen Füllungszustand für den Stack (26) beschreibt,
Überwachung des erfassten Füllungsparameters durch Vergleich mit einem vorbestimmten Grenzwert (GW),
segmentweises Auslagern eines Teiles der in dem Stack (26) vorhandenen Datenstruktur in ein weiteres, auf den Datenträger befindliches Speichermedium (18,20), sobald ein vorbestimmtes Verhältnis zwischen dem Grenzwert (GW) und dem Füllungsparameter erreicht ist, und
gegebenenfalls Einlagern des ausgelagerten Stacksegmentes (30) in den Stack (26), sobald ein vorbestimmtes Verhältnis zwischen dem Füllungsparameter und einem zweiten Grenzwert erreicht ist,
gegebenenfalls Verwalten einer Zieladresse des jeweils in den nichtflüchtigen Schreib/Lese-Speicher (18) ausgelagerten Stacksegmentes (30), welche bei jedem neu ausgelagerten Stacksegment (30) um ein ganzzahliges Vielfaches der Segmentgröße erhöht und bei jedem wieder in den Stack (26) eingelagerten Stacksegment (30) um ein ganzzahliges Vielfaches der Segmentgröße erniedrigt wird.

14. Tragbarer Datenträger (10) mit einem Microcontroller (32), zumindestens bestehend aus einem Prozessor (12), einer I/O-Einheit (14), zumindest einem flüchtigen Schreib-/Lese-Speicher (16) mit einem Stack (26), zumindest einem nicht-flüchtigen Speicher (18, 20), einem Betriebssystem (22) und einem Daten-, Steuer- und Adreßbus (24), **dadurch gekennzeichnet, daß** das Betriebssystem (22) Mittel aufweist, um den Stack (26) zu segmentieren und um bei Überschreiten eines definierten Füllungszustandes zumindest ein Segment (30) des flüchtigen Schreib-/Lese-Speichers (16) in den nicht-flüchtigen Speicher (18, 20) auszulagern.

15. Tragbarer Datenträger nach A 14 nach Anspruch 14, **dadurch gekennzeichnet, daß** der nicht-flüchtige Speicher ein nicht-flüchtiger Schreib-/Lese-Speicher (18) ist.

16. Tragbarer Datenträger nach Anspruch 14 **dadurch gekennzeichnet, daß** der Mikrokontroller (32) für die Auslagerung eines Segmentes (30) in den nicht-flüchtigen Speicher (18, 20) zusätzlich einen Pagekontroller (34) aufweist, der zur Durchführung eines Verfahrens nach einem der Ansprüche 1 - 10 ausgelegt ist.

## Claims

1. A method for virtual enlargement of a data structure of a volatile read-write memory (16) on a portable data carrier that is organized as a stack (26), whereby
- the stack (26) is segmented into at least two stack segments (30),
- a fill parameter describing a fill state for the stack (26) is detected and monitored by comparison with a predetermined limiting value (GW),
- a part of the data structure is swapped out to a further storage medium (18, 20) located on the data carrier as soon as a predetermined relation between limiting value (GW) and fill parameter is reached, and
- the swapping out to the further storage medium (18, 20) is effected segment by segment.

2. A method according to claim 1, **characterized in that** the further storage medium is a read-write memory, in particular a nonvolatile read-write memory (18).

3. A method according to claim 1, **characterized in that** the method additionally includes the following step:
- swapping in the swapped out stack segment (30) to the stack (26) as soon as a predetermined relation between fill parameter and a second limiting value is reached, in particular as soon as the fill parameter is smaller than the second limiting value.

4. A method according to any of the above claims, **characterized by** the following additional step:
- managing a destination address of the stack segment (30) swapped out to the nonvolatile read-write memory (18), preferably in a register in the volatile read-write memory (16), the destination address being incremented by an integral multiple of the segment size with each newly swapped out stack segment (30) and decremented by an integral multiple of the segment size with each stack segment (30) swapped back to the stack (26).

5. A method according to any of the above claims, **characterized in that** segmentation is effected into segments with the size 2^{*n-m*}, where *m* = 1,2,3..., 2^{*m*} = number number of segmentations and 2^{*n*} = size of the stack (26), and *m* is chosen so as to obtain optimal balancing of the data carrier system.

6. A method according to claim 5, **characterized in that** the limiting value (GW) and/or the second limiting value matches the size of the segment (30), namely 2^{*n-m*}, or an integral multiple of the segment size.

7. A method according to claim 1, **characterized in that** the relation between the limiting value (GW) and the fill parameter is described by the following relation: "Fill parameter ≤ limiting value."

8. A method according to any of the above claims, **characterized in that** the smart card (10) has an operating system that permits reloading of executable program code.

9. A method according to any of the above claims, **characterized in that** swapping out and/or in of a stack segment (30) is effected by means of known block-by-block transfer instructions.

10. A method according to any of the above claims, **characterized in that** the fill parameter is formed as a stack pointer (28).

11. A method according to claim 1, **characterized in that** the stack segment (30) that is oldest is swapped out.

12. A method according to any of the above claims, **characterized in that** the swapped out stack segment (30) contains return addresses of subprograms, local variables, intermediate results and/or call parameters.

13. A method according to any of the above claims, **characterized in that** a management of the stack (26) is implemented in hardware which executes the following steps:
segmenting the stack (26) into at least two stack segments (30),
detecting a fill parameter describing a fill state for the stack (26),
monitoring the detected fill parameter by comparison with a predetermined limiting value (GW),
swapping out segment by segment a part of the data structure present in the stack (26) to a further storage medium (18, 20) located on the data carrier as soon as a predetermined relation between the limiting value (GW) and the fill parameter is reached, and
optionally swapping the swapped out stack segment (30) into the stack (26) as soon as a predetermined relation between the fill parameter and a second limiting value is reached,
optionally managing a destination address of the stack segment (30) swapped out to the nonvolatile read-write memory (18), the destination address being incremented by an integral multiple of the segment size with each newly swapped out stack segment (30) and decremented by an integral multiple of the segment size with each stack segment (30) swapped back to the stack (26).

14. A portable data carrier (10) having a microcontroller (32) consisting at least of a processor (12), an I/O unit (14), at least one volatile read-write memory (16) with a stack (26), at least one nonvolatile memory (18, 20), an operating system (22) and a data, control and address bus (24), **characterized in that** the operating system (22) has means for segmenting the stack (26) and for swapping out at least one segment (30) of the volatile read-write memory (16) to the nonvolatile memory (18, 20) when a defined fill state is exceeded.

15. A portable data carrier according to claim 14, **characterized in that** the nonvolatile memory is a nonvolatile read-write memory (18).

16. A portable data carrier according to claim 14, **characterized in that** the microcontroller (32) additionally has a page controller (34) designed for carrying out a method according to any of claims 1 to 10 for swapping out a segment (30) to the nonvolatile memory (18, 20).

## Revendications

1. Procédé permettant l'augmentation virtuelle d'une structure de données d'une mémoire d'écriture/lecture (16) volatile sur un support de données portable, organisé en pile (26), dans lequel :
- la pile (26) est segmentée en au moins deux segments de pile (30),
- un paramètre de remplissage, décrivant un état de remplissage de la pile (26), est obtenu et surveillé par comparaison avec une valeur limite (GW) prédéterminée,
- une partie de la structure de données est déplacée et stockée ailleurs dans un autre support de stockage (18, 20) se trouvant sur le support de données, dès qu'un rapport prédéterminé entre la valeur limite (GW) et le paramètre de remplissage est atteint,
et
- le stockage ailleurs dans l'autre support de stockage (18, 20) se fait par segments.

2. Procédé selon la revendication 1, **caractérisé en ce que** l'autre support de données est une mémoire à écriture/lecture, en particulier une mémoire à écriture/lecture (18) non volatile.

3. Procédé selon la revendication 1, **caractérisé en ce que** le procédé comprend les étapes suivantes supplémentaires :
- réintégration dans la pile (26) du segment de pile (30) stocké ailleurs, dès qu'un rapport prédéterminé entre le paramètre de remplissage et une deuxième valeur limite est atteint, en particulier dès que le paramètre de remplissage est inférieur à la deuxième valeur limite.

4. Procédé selon l'une des revendications précédentes, **caractérisé par** les étapes supplémentaires suivantes :
- gestion d'une adresse cible de chaque segment de pile (30) stocké dans la mémoire d'écriture/lecture (18) non volatile, de préférence dans un registre se trouvant dans la mémoire d'écriture/lecture (16) volatile, sachant que, à chaque nouveau segment de pile (30) stocké, l'adresse cible est augmentée d'un multiple entier de la valeur de la taille du segment, et, pour chaque segment de pile (30) intégré dans la pile (26), l'adresse cible est abaissée d'un multiple entier de la taille de segment.

5. Procédé selon l'une des revendications précédentes, **caractérisé en ce que** la segmentation se fait en segments de taille 2^{n-m} avec m = 1,2,3..., sachant que 2^{m} = nombre des segmentations et 2ⁿ = taille de la pile (26) et que m est choisi de manière à atteindre un équilibre optimal pour le système de support de données.

6. Procédé selon la revendication 5, **caractérisé en ce que** la valeur limite (GW) et/ou la deuxième valeur limite coïncide(nt) avec la taille du segment (30), précisément 2^{n-m} ou avec un multiple entier de la taille de segment.

7. Procédé selon la revendication 1, **caractérisé en ce que** le rapport entre la valeur limite (GW) et le paramètre de remplissage peut être décrit par la relation suivante : "degré de remplissage ≤ valeur limite".

8. Procédé selon l'une des revendications précédentes, **caractérisé en ce que** la carte à puce (10) présente un système d'exploitation permettant un rechargement d'un code de programme exécutable.

9. Procédé selon l'une des revendications précédentes, **caractérisé en ce que** le stockage ailleurs ou la réintégration d'un segment de pile (30) se fait à l'aide d'instructions de transfert par blocs, connues.

10. Procédé selon l'une des revendications précédentes, **caractérisé en ce que** le paramètre de remplissage est réalisé sous forme de pointeur de pile (28).

11. Procédé selon la revendication 1, **caractérisé en ce que** chaque fois le segment de pile (30) déstocké est le plus ancien.

12. Procédé selon l'une des revendications précédentes, **caractérisé en ce que** le segment de pile (30) déstocké contient des adresses de retour de sous-programmes, de variables locales, de résultats intermédiaires et/ou de paramètres d'interrogation.

13. Procédé selon l'une des revendications précédentes, **caractérisé en ce qu'**une gestion de la pile (26) est réalisée dans le matériel, effectuant les étapes ci-après :
segmentation de la pile (26) en au moins deux segments de pile (30),
acquisition d'un paramètre de remplissage décrivant un état de remplissage de la pile (26),
surveillance du paramètre de remplissage acquis par comparaison avec une valeur limite (GW) prédéterminée,
stockage ailleurs par segments d'une partie de la structure de données existant dans la pile (26) en un autre support de stockage (18, 20) se trouvant sur le support de données dès qu'un rapport prédéterminé entre la valeur limite (GW) et le paramètre de remplissage est atteint, et,
le cas échéant, réintégration du segment de pile (30) déstocké dans la pile (26), dès qu'un rapport prédéterminé, entre le paramètre de remplissage et une deuxième valeur limite, est atteint,
le cas échéant, gestion d'une adresse cible pour chaque segment de pile (30) stocké ailleurs dans la mémoire d'écriture/lecture (18) non volatile qui, à chaque nouveau segment de pile (30) stocké ailleurs, est augmentée d'un multiple entier de la taille du segment et, à chaque segment de pile (30) de nouveau réintégré dans la pile (26), est diminuée de la valeur d'un multiple entier de la taille de segment.

14. Support de données (10) portable, avec un microcontrôleur (32) formé au moins d'un processeur (12), d'une unité E/S (14), d'au moins une mémoire d'écriture/lecture (16) volatile avec une pile (26), au moins d'une mémoire (18, 20) non volatile, d'un système d'exploitation (22) et d'un bus de données, de commande et d'adresse (24), **caractérisé en ce que** le système d'exploitation (22) présente des moyens pour segmenter la pile (26) et pour, en cas de dépassement d'un état de remplissage défini, stocker au moins un segment (30) de la mémoire d'écriture/lecture (16) volatile ailleurs dans la mémoire (18, 20) non volatile.

15. Support de données portable selon la revendication 14, **caractérisé en ce que** la mémoire non volatile est une mémoire d'écriture/lecture (18) non volatile.

16. Support de données portable selon la revendication 14, **caractérisé en ce que** le microcontrôleur (32) prévu pour le stockage ailleurs d'un segment (30) dans la mémoire (18, 20) non volatile présente en plus un contrôleur de pages (34), conçu pour mettre en oeuvre le procédé selon l'une des revendications 1 à 10.
